# DEMANDE DE BREVET EUROPEEN

(11) **EP 2 261 849 A1**
(43) Date de publication de la demande: **15.12.2010**
(21) Numéro de dépôt: 10162090.4
(22) Date de dépôt: 06.05.2010
(51) Int. Cl.: G06Q 20/00

(54) **Système de contrôle de paiement**

(30) Priorité: 12.06.2009 FR 0902867
(71) Demandeur: Alcatel Lucent, 75008 Paris (FR)
(72) Inventeur: Sinnaya, Anula, 92707, Colombes (FR); Papillon, Serge, 91620, Nozay (FR)
(74) Mandataire: Nicolle, Olivier

(57) **Abrégé**

Pour contrôler un paiement traité par un terminal mobile (TM) d'un utilisateur à travers un réseau de télécommunications (RT), une règle de paiement est transmise depuis un serveur (SA) au terminal mobile sur requête du terminal mobile, puis le terminal mobile compare un montant du paiement à un seuil défini dans la règle de paiement, et transmet un message comprenant des données relatives au paiement depuis le terminal mobile à un terminal (TC) d'un conseiller si le montant du paiement dépasse le seuil, et le terminal du conseiller transmet un message au terminal mobile (TM) indiquant l'acceptation ou le refus du paiement par le conseiller.

## Description

La présente invention concerne un système de contrôle de paiement, plus particulièrement pour accepter ou refuser un paiement souhaité par un utilisateur.

Actuellement, il existe un besoin de contrôler le montant des achats effectués par certaines personnes, qui sont exposées à des risques de fraudes lorsqu'elles effectuent un achat. Par exemple, une personne âgée ou une personne ayant des pertes de mémoire peut ne pas connaître le prix courant d'un article et payer plus cher cet article que le prix normal. Selon un autre exemple, des parents peuvent souhaiter contrôler la pertinence de l'achat effectué par leurs enfants, tel que le montant ou le type de l'article acheté.

Une solution pour contrôler des paiements est de fixer un seuil de paiement, qui est fixé par une entité de paiement telle qu'une banque. Cette solution s'applique à des paiements par carte de crédit ou pour des retraits d'espèces. Cette solution a l'inconvénient que le seuil est utilisé quel que soit le contexte du paiement. Par exemple, il est acceptable de payer 150 euros pour acheter de la nourriture pour une semaine tandis qu'il n'est pas acceptable de payer 150 euros pour acheter 10 kilos de pommes vendus par une personne malicieuse. De même, un tel seuil ne permet pas à des parents de vérifier ce qu'achète leur enfant pour un montant donné.

Un objectif de l'invention est de remédier aux inconvénients précédents en proposant un système de contrôle de paiements qu'une personne souhaite effectuer.

Pour atteindre cet objectif, un procédé pour contrôler un paiement traité par un terminal mobile d'un utilisateur à travers un réseau de télécommunications, comprenant les étapes suivantes dans le terminal mobile :
après réception d'une règle de paiement transmise depuis un serveur sur requête du terminal mobile, comparer un montant du paiement à un seuil défini dans la règle de paiement,
si le montant du paiement dépasse le seuil, transmettre un message comprenant des données relatives au paiement à un terminal d'un conseiller, afin que ce dernier transmette un message au terminal mobile indiquant l'acceptation ou le refus du paiement par le conseiller.

Avantageusement, le conseiller est apte à juger si le contexte du paiement est correct, même si un seuil de paiement est dépassé, et peut prendre la décision d'accepter ou de refuser le paiement.

Selon une autre caractéristique de l'invention, les données relatives au paiement peuvent comprendre des données relatives à la nature d'un produit qui est l'objet du paiement.

Ces données relatives à la nature du produit permettent au conseiller d'identifier le produit et sont ainsi utiles au conseiller pour prendre la décision d'accepter ou de refuser le paiement.

L'invention concerne également un serveur pour contrôler un paiement traité par un terminal mobile d'un utilisateur à travers un réseau de télécommunications, comprenant des moyens pour transmettre, sur requête du terminal mobile, une règle de paiement au terminal mobile, de sorte que le terminal mobile compare un montant du paiement à un seuil défini dans la règle de paiement et transmette un message avec des données relatives au paiement à un terminal d'un conseiller si le montant du paiement dépasse le seuil, afin que le terminal du conseiller transmette un message au terminal mobile indiquant l'acceptation ou le refus du paiement par le conseiller.

L'invention concerne également un serveur pour contrôler un paiement traité par un terminal mobile d'un utilisateur à travers un réseau de télécommunications, comprenant des moyens pour retransmettre un message reçu depuis le terminal mobile et comprenant des données relatives au paiement à un terminal d'un conseiller, ledit message étant transmis depuis le terminal mobile au serveur si le montant du paiement dépasse un seuil défini dans une règle de paiement transmise depuis un deuxième serveur au terminal mobile sur requête du terminal mobile, ledit terminal du conseiller étant apte à transmettre un message au terminal mobile indiquant l'acceptation ou le refus du paiement par le conseiller.

L'invention concerne encore un terminal mobile d'un utilisateur pour contrôler un paiement traité par le terminal mobile à travers un réseau de télécommunications, comprenant :
des moyens pour récupérer une règle de paiement depuis un serveur,
des moyens pour comparer un montant du paiement à un seuil défini dans la règle de paiement,
des moyens pour transmettre un message avec des données relatives au paiement à un terminal d'un conseiller, si le montant du paiement dépasse le seuil, et
des moyens pour recevoir un message transmis depuis le terminal du conseiller indiquant l'acceptation ou le refus du paiement par le conseiller.

La présente invention et les avantages qu'elle procure seront mieux compris au vu de la description ci-après faite en référence aux figures annexées, dans lesquelles :
- la figure 1 est un bloc-diagramme schématique d'un système de contrôle de paiement selon une réalisation de l'invention, et
- la figure 2 est un algorithme d'un procédé pour contrôler des paiements d'une personne selon une réalisation de l'invention.

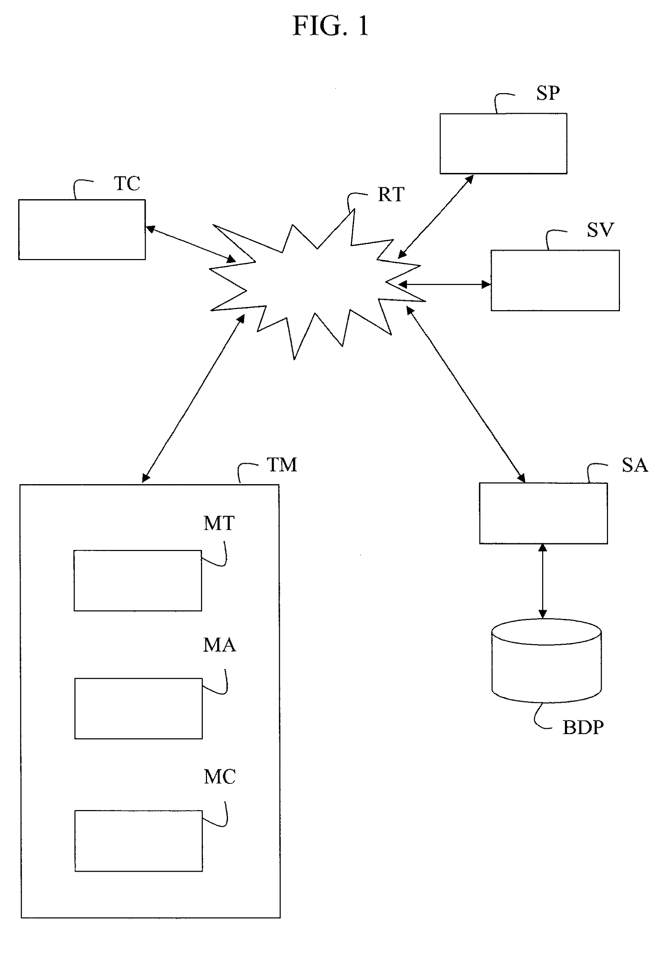

En référence à la figure 1, un système de contrôle de paiement comprend un terminal mobile TM, un terminal de conseiller TC, un serveur de paiement SP, un serveur de validation SV et un serveur d'application SA, aptes à communiquer entre eux à travers un réseau de télécommunications RT.

Le réseau de télécommunications RT peut comprendre un réseau sans fil, tel qu'un réseau de radiocommunication cellulaire numérique de type GSM (« Global System for Mobile communications » en anglais) ou UMTS (« Universal Mobile Telecommunications System » en anglais). Le réseau de télécommunications RT peut être connecté à un réseau de paquets de type IMS ("IP Multimédia Subsystem" en anglais). Par ailleurs, le réseau de télécommunications RT peut comprendre un réseau filaire ou être une combinaison de réseaux filaires et sans fil.

Selon un exemple, un terminal mobile TM est un terminal de radiocommunications cellulaire mobile, relié par un canal de radiocommunication à un réseau d'accès comprenant le réseau fixe d'un réseau de radiocommunications, par exemple de type GSM ou UMTS.

Selon un autre exemple, un terminal mobile TM comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anlais) ou conforme à l'une des normes 802.1x, ou de moyenne portée selon le protocole WIMAX ("World wide lnteroperability Microwave Access" en anglais).

Un terminal de conseiller TC peut être un ordinateur personnel ou un terminal intelligent pouvant communiquer par une liaison filaire ou sans fil, ou encore un terminal mobile radiocommunications mobile.

Le serveur de d'application SA gère une base de données de profil BDP qui contient notamment des profils associés à des utilisateurs ayant souscrit un abonnement auprès de l'opérateur du réseau de télécommunication RT. Chaque profil décrit les services auxquels l'utilisateur a accès, et est associé à une règle de paiement RegP. Selon un exemple, une règle de paiement RegP définit un seuil qui correspond à un montant maximum d'un paiement pour lequel aucun contrôle n'est nécessaire. Ce seuil peut être défini par des conseillers en accord avec la personne ayant souscrit au service de contrôle de paiement, la personne pouvant être l'utilisateur du terminal mobile TM. La règle de paiement définit une liste de conseillers qui sont aptes à contrôler un paiement lorsque le montant du paiement dépasse le seuil.

Le terminal mobile TM comprend un module de transaction MT, un module d'agent MA et un module de communication MC. Le terminal mobile TM a la fonctionnalité de participer à la réalisation d'un paiement lorsque l'utilisateur souhaite faire un achat.

Le module de transaction MT traite un paiement que souhaite effectuer l'utilisateur du terminal mobile, c'est-à-dire initie un processus de réalisation du paiement. Le module de transaction MT identifie l'organisme responsable du paiement et récupère des données relatives au paiement depuis le profil de l'utilisateur, par exemple au moyen de l'identité internationale IMSI (« International Mobile Subscriber ldentity » en anglais) associée au terminal mobile.

Le module d'agent MA identifie et récupère une règle de paiement RegP associée au profil de l'utilisateur, en communiquant avec le serveur d'application SA, puis exécute la règle de paiement identifiée.

Selon le résultat de l'exécution de la règle, par exemple si le montant du paiement dépasse un seuil prédéfini, le module d'agent MA peut activer le serveur de validation SV afin d'établir une communication avec un conseiller. Si le premier conseiller de la liste n'est pas disponible, le conseiller suivant dans la liste est appelé. Dans le cas où aucun conseiller n'est disponible, un autre seuil peut être défini par exemple de telle sorte que le paiement est accepté si le montant n'excède pas un autre seuil supérieur, qui correspond à titre d'exemple à un supplément de 50 euros.

Par ailleurs, le module d'agent MA a pour fonctionnalité de fournir des données relatives au paiement au serveur de validation SV, contenant par exemple des informations sur le prix d'achat du produit et le type de produit, et optionnellement des données relatives à la nature du produit à acheter, contenant par exemple des informations les plus précises possibles sur les caractéristiques du produit afin de pouvoir l'identifier clairement. Le module d'agent MA utilise les capacités du terminal mobile TM les plus adaptées pour cette fonctionnalité. Plusieurs technologies supportées par le terminal mobile peuvent être utilisées. Par exemple, le terminal mobile peut être doté d'un moyen de communication radio de courte portée pour identifier le produit à acheter, tel qu'un lecteur RFID ("Radio Frequency IDenfîcatîon" en anglais) communiquant avec un badge RFID associé au produit à acheter. Selon d'autres exemples, le terminal mobile peut être doté d'un moyen de capture d'image, tel qu'une caméra ou un appareil photographique pour prendre une photographie du produit à acheter, ou encore d'un moyen de géolocalisation utilisant un service de localisation du réseau de télécommunication ou un service de système de positionnement GPS ("Global Position System" en anglais). Par exemple, une localisation de l'utilisateur à son domicile permet de déduire que le paiement concerne un produit vendu par une personne pratiquant du porte à porte et le paiement peut être automatiquement refusé.

Le serveur de validation SV peut être un serveur multimédia, tel qu'un serveur vocal, qui transmet un message au conseiller sélectionné. Le message contient par exemple des données relatives à des détails du paiement, et optionnellement des données relatives à la nature du produit qui est l'objet du paiement. Le message peut être un message multimédia et éventuellement un message interactif.

En fonction des données reçues, le conseiller a le choix entre accepter ou refuser le paiement, demander une communication avec l'utilisateur, ou encore requérir des données supplémentaires, telles que des données relatives à la nature du produit à acheter fournies par le module d'agent MA. Dans tous les cas, le choix du conseiller est transmis au module d'agent MA. Dans le cas où une communication avec l'utilisateur est demandée, la communication est établie entre le terminal mobile TM et le terminal de conseiller TC au moyen du module de communication MC.

Par ailleurs, la décision finale d'accepter ou de refuser le paiement par le conseiller est transmise depuis le terminal de conseiller TC au module d'agent MA du terminal mobile TM via le serveur de validation SV. Si le paiement est accepté, un ordre de paiement est transmis depuis le module d'agent MA au module de transaction MT qui peut ensuite communiquer avec le serveur de paiement SP pour finaliser le paiement.

Dans une architecture de type IMS, les fonctionnalités du serveur de d'application SA et du serveur de validation SV peuvent être incluses dans un même et unique serveur.

Optionnellement, des conseillers et l'utilisateur souhaitant effectuer un paiement ont enregistré leurs différents terminaux de communication auprès d'un serveur de présence. Le module d'agent MA collabore avec ce serveur de présence pour déterminer le terminal avec lequel un conseiller est disponible. L'utilisation d'un serveur de présence dans une architecture de type IMS permet de contacter plus rapidement un conseiller.

Par ailleurs, la communication entre l'utilisateur et le conseiller sélectionné peut être une communication audio, ou être d'un autre type, tel qu'un service de messagerie instantanée.

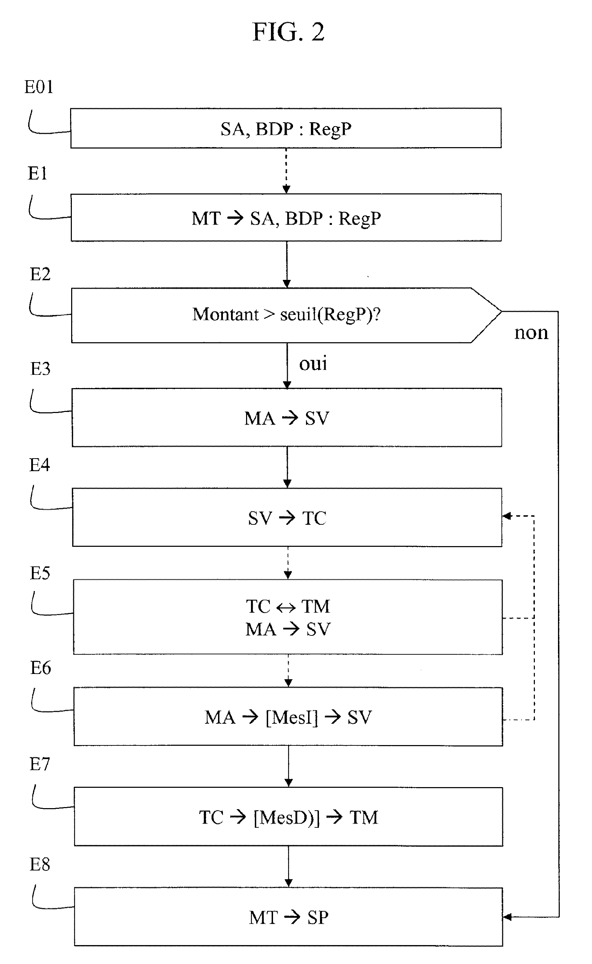

En référence à la figure 2, un procédé pour contrôler des paiements d'un utilisateur selon une réalisation de l'invention comprend des étapes E1 à E8 exécutées dans le système de contrôle de paiement.

A une étape préliminaire E01, au moins une règle de paiement RegP est mémorisée en correspondance avec un profil de l'utilisateur du terminal mobile TM dans une base de données de profil BDP gérée par le serveur d'application SA du réseau de télécommunication RT. La règle de paiement définit notamment un seuil correspondant à un montant maximum d'un paiement, et est en partie déterminée par l'utilisateur du terminal mobile ou de manière plus générale par la personne ayant souscrit un abonnement auprès de l'opérateur du réseau de télécommunication RT pour utiliser le service de contrôle de paiement, cette personne pouvant être ledit utilisateur, telle qu'une personne âgée, ou un parent de l'utilisateur.

A l'étape E1, l'utilisateur souhaite effectuer un paiement, tel que l'achat d'un produit trouvé dans une boutique, et commande son terminal mobile TM pour traiter le paiement. Le module de transaction MT identifie le serveur d'application SA qui gère le compte de la personne ayant souscrit au service de contrôle de paiement et récupère des données relatives au paiement depuis la base de données de profil BDP. Sur requête du terminal mobile, le serveur d'application SA transmet une règle de paiement RegP associée à l'utilisateur du terminal mobile TM, par exemple au moyen de l'identité internationale IMSI associée au terminal mobile.

A l'étape E2, le module d'agent MA compare le montant du paiement à un seuil défini dans la règle de paiement RegP.

Si le montant est supérieur au seuil, le procédé passe à l'étape E3.

Si le montant est inférieur au seuil, le module d'agent MA transmet un message de validation au module de transaction MT et le procédé passe à l'étape E8.

A l'étape E3, le module d'agent MA détermine une liste de conseillers associée à l'utilisateur dans la règle de paiement RegP et sélectionne au moins un conseiller de la liste, et par conséquent sélectionne un terminal du conseiller.

Optionnellement, le module d'agent MA active au moins une fonctionnalité du terminal mobile TM pour identifier la nature du produit que souhaite acheter l'utilisateur. Par exemple, le terminal mobile est doté d'un moyen de capture d'image, tel qu'une caméra ou un appareil photographique, et demande à l'utilisateur de prendre une photographie du produit à acheter.

Le module d'agent MA active le serveur de validation SV afin d'établir une communication entre l'utilisateur et un conseiller sélectionné. Le module d'agent MA transmet au serveur de validation SV un message de requête comprenant des données relatives à des détails du paiement, et optionnelle ment des données relatives à la nature du produit à acheter.

A l'étape E4, le serveur de validation SV transmet un message au terminal TC du conseiller sélectionné, le message comprenant des données relatives à des détails du paiement, et optionnellement des données relatives à la nature du produit à acheter. Le contenu message est déterminé en fonction du contenu du message de requête précédemment transmis par le module d'agent MA. Optionnellement, le message est interactif, permettant par exemple au conseiller d'obtenir des informations dans un ordre prédéfini.

Le conseiller analyse les données contenues dans le message reçu et peut effectuer différentes actions selon les étapes E5 à E7.

A l'étape E5, le conseiller demande l'établissement d'une communication avec l'utilisateur. Par exemple, un message est transmis au module d'agent MA du terminal mobile TM et contient des instructions pour commander au module de communication MC l'établissement d'une communication entre le terminal mobile TM et le terminal de conseiller TC. Pendant cette communication, l'utilisateur donne des explications au conseiller sur le produit à acheter et sur le paiement. A la fin de la communication, le module d'agent MA active de nouveau le serveur de validation SV et le procédé repasse à l'étape E4.

A l'étape E6, le conseiller demande des données supplémentaires, telles que des données relatives à la nature du produit à acheter fournies par le module d'agent MA, si ces dernières n'ont pas déjà été fournies précédemment. Cette demande est transmise au terminal mobile via le serveur de validation SV. Comme expliqué précédemment, le module d'agent MA active au moins une fonctionnalité du terminal mobile TM, tel qu'une caméra ou un appareil photographique, pour identifier la nature du produit que souhaite acheter l'utilisateur. Le module d'agent MA transmet au serveur de validation SV un message d'identification Mesl comprenant des données relatives à la nature du produit à acheter, qui permettent d'identifier le produit qui est l'objet du paiement. Le procédé repasse ensuite à l'étape E4.

Les étapes E5 et E6 sont optionnelles et peuvent être exécutées dans un ordre quelconque.

A l'étape E7, le conseiller accepte le paiement et transmet un message de décision MesD indiquant l'acceptation du paiement au module de transaction MT via le serveur de validation SV et le module d'agent MA, et le procédé passe alors à l'étape E8. Le conseiller peut accepter le paiement directement après l'étape E4, ou après l'une des étapes E5 et E6 en ayant obtenu des informations supplémentaires sur le paiement souhaité.

Au contraire, le conseiller peut refuser le paiement, et un message de décision MesD indiquant le refus du paiement indiquant ce refus de paiement est transmis au terminal mobile TM, via le serveur de validation SV. Dans ce cas, le module de transaction MT interrompt le paiement et indique par exemple à l'utilisateur que le paiement a été refusé par le conseiller.

A l'étape E8, le module de transaction MT poursuit le traitement du paiement et transmet un ordre de paiement au serveur de paiement SP pour finaliser le paiement.

## Revendications

1. Procédé pour contrôler un paiement traité par un terminal mobile (TM) d'un utilisateur à travers un réseau de télécommunications (RT), comprenant les étapes suivantes dans le terminal mobile :
après réception (E1) d'une règle de paiement (RegP) transmise depuis un serveur (SA) sur requête du terminal mobile, comparer (E2) un montant du paiement à un seuil défini dans la règle de paiement,
si le montant du paiement dépasse le seuil, transmettre (E3, E4) un message comprenant des données relatives au paiement à un terminal (TC) d'un conseiller, afin que ce dernier transmette (E7) un message (MesD) au terminal mobile (TM) indiquant l'acceptation ou le refus du paiement par le conseiller.

2. Procédé conforme à la revendication 1, selon lequel les données relatives au paiement comprennent des données relatives à la nature d'un produit qui est l'objet du paiement.

3. Procédé conforme à la revendication 1 ou 2, selon lequel la règle de paiement (RegP) définit une liste de conseillers associée à l'utilisateur et le terminal mobile sélectionne au moins un conseiller de la liste pour transmettre le message comprenant des données relatives au paiement à un terminal (TC) du conseiller sélectionné.

4. Procédé conforme à l'une des revendications 1 à 3, selon lequel le message comprenant des données relatives au paiement est transmis depuis le terminal mobile (TM) à un deuxième serveur (SV) puis retransmis depuis le deuxième serveur (SV) au terminal (TC) du conseiller.

5. Procédé conforme à la revendication 4, selon lequel le message retransmis depuis le deuxième serveur (SV) au terminal (TC) du conseiller est un message interactif.

6. Serveur (SA) pour contrôler un paiement traité par un terminal mobile (TM) d'un utilisateur à travers un réseau de télécommunications (RT), comprenant des moyens pour transmettre, sur requête du terminal mobile, une règle de paiement (RegP) au terminal mobile (TM), de sorte que le terminal mobile compare un montant du paiement à un seuil défini dans la règle de paiement et transmette un message avec des données relatives au paiement à un terminal (TC) d'un conseiller si le montant du paiement dépasse le seuil, afin que le terminal (TC) du conseiller transmette un message (MesD) au terminal mobile (TM) indiquant l'acceptation ou le refus du paiement par le conseiller.

7. Serveur (SV) pour contrôler un paiement traité par un terminal mobile (TM) d'un utilisateur à travers un réseau de télécommunications (RT), comprenant des moyens pour retransmettre un message reçu depuis le terminal mobile (TM) et comprenant des données relatives au paiement à un terminal (TC) d'un conseiller, ledit message étant transmis depuis le terminal mobile (TM) au serveur si le montant du paiement dépasse un seuil défini dans une règle de paiement (RegP) transmise depuis un deuxième serveur (SA) au terminal mobile (TM) sur requête du terminal mobile, ledit terminal (TC) du conseiller étant apte à transmettre un message (MesD) au terminal mobile (TM) indiquant l'acceptation ou le refus du paiement par le conseiller.

8. Terminal mobile (TM) d'un utilisateur pour contrôler un paiement traité par le terminal mobile (TM) à travers un réseau de télécommunications (RT), comprenant :
des moyens (MA) pour récupérer une règle de paiement (regP) depuis un serveur (SA),
des moyens (MA) pour comparer un montant du paiement à un seuil défini dans la règle de paiement,
des moyens (MA) pour transmettre un message avec des données relatives au paiement à un terminal (TC) d'un conseiller, si le montant du paiement dépasse le seuil, et
des moyens (MA) pour recevoir un message (MesD) transmis depuis le terminal (TC) du conseiller indiquant l'acceptation ou le refus du paiement par le conseiller.

9. Terminal conforme à la revendication 8, comprenant en outre des moyens (MA) pour déterminer des données relatives à la nature d'un produit qui est l'objet du paiement.

10. Terminal conforme à la revendication 9, dans lequel lesdits moyens (MA) pour déterminer des données relatives à la nature d'un produit qui est l'objet du paiement comprennent une caméra.

11. Terminal conforme à la revendication 9 ou 10, dans lequel lesdits moyens (MA) pour déterminer des données relatives à la nature d'un produit qui est l'objet du paiement comprennent un moyen de communication radio de courte portée.

12. Terminal conforme à l'une des revendications 9 à 11, dans lequel lesdits moyens (MA) pour déterminer des données relatives à la nature d'un produit qui est l'objet du paiement comprennent un moyen de géolocalisation.
